(19) Europäisches Patentamt / European Patent Office / Office européen des brevets

(11) **EP 3 348 085 B1**

(12) **FASCICULE DE BREVET EUROPEEN**

(45) Date de publication et mention de la délivrance du brevet:
**08.03.2023 Bulletin 2023/10**

(21) Numéro de dépôt: **16721459.2**

(22) Date de dépôt: **01.04.2016**

(51) Classification Internationale des Brevets (IPC):
**H04L 9/40** *(2022.01)*   **H04W 12/06** *(2009.01)*
**H04W 4/40** *(2018.01)*   **H04W 4/80** *(2018.01)*
**G07C 9/00** *(2006.01)*

(52) Classification Coopérative des Brevets (CPC):
**H04W 12/06; G07C 9/00309; G07C 9/00571; H04W 4/40; H04W 4/80;** G07C 2009/00412; G07C 2009/00769

(86) Numéro de dépôt international:
**PCT/FR2016/000063**

(87) Numéro de publication internationale:
**WO 2016/156682 (06.10.2016 Gazette 2016/40)**

(54) **PROCÉDÉ DE CHARGEMENT D'UNE CLÉ VIRTUELLE AU SEIN D'UN TERMINAL UTILISATEUR ET TERMINAL UTILISATEUR ASSOCIÉ**

VERFAHREN ZUM LADEN EINES VIRTUELLEN SCHLÜSSELS IN EINEM BENUTZERENDGERÄT UND ZUGEHÖRIGES BENUTZERENDGERÄT

METHOD FOR LOADING A VIRTUAL KEY IN A USER TERMINAL AND ASSOCIATED USER TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2015 FR 1552819**

(43) Date de publication de la demande:
**18.07.2018 Bulletin 2018/29**

(73) Titulaire: **Valeo Comfort and Driving Assistance 94046 Créteil Cedex (FR)**

(72) Inventeur: **CHALOCHET, Aymeric 94046 Créteil Cedex (FR)**

(74) Mandataire: **Delplanque, Arnaud Valeo Comfort and Driving Assistance 6 rue Daniel Costantini 94000 Créteil (FR)**

(56) Documents cités:
**WO-A1-2013/189584     WO-A1-2015/091951**

FR-A1- 2 965 434      US-A1- 2014 242 971
US-A1- 2014 270 172

• KASPER T ET AL: "Rights Management with NFC Smartphones and Electronic ID Cards: A Proof of Concept for Modern Car Sharing", CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 34 - 53 , 9 juillet 2013 (2013-07-09), XP047044654, ISSN: 0302-9743 ISBN: 978-3-642-27256-1 Extrait de l'Internet: URL:http://rd.springer.com/chapter/10.1007/978-3-642-41332-2_3
• Continental: "Continental Corporation -Virtual Key Service for Car-Sharing Companies: D'Ieteren and Continental Form Joint Venture", Continental press release, 12 mars 2015 (2015-03-12), XP055247679, Extrait de l'Internet: URL:http://www.continental-corporation.com/www/pressportal_com_en/themes/press_relea ses/3_automotive_group/interior/press_rele ases/pr_2015_03_12_jointventure_en.html [extrait le 2016-02-04]

## Description

DOMAINE TECHNIQUE AUQUEL SE RAPPORTE L'INVENTION

La présente invention concerne la gestion de clés virtuelles.

Elle concerne plus particulièrement un procédé de chargement d'une clé virtuelle au sein d'un terminal utilisateur et un terminal utilisateur associé.

L'invention s'applique particulièrement avantageusement dans le cas où la clé virtuelle permet d'autoriser la commande d'au moins une fonctionnalité d'un véhicule.

ARRIERE-PLAN TECHNOLOGIQUE

On a proposé de commander certaines fonctionnalités d'un véhicule automobile, telles que le déverrouillage des portes du véhicule, au moyen d'un terminal utilisateur, par exemple un téléphone portable couramment utilisé par l'utilisateur du véhicule.

Afin de ne permettre cette commande qu'aux personnes effectivement autorisées, on utilise une clé virtuelle mémorisée dans le terminal utilisateur et dont une unité électronique de commande du véhicule vérifie la validité avant de commander le déverrouillage des portes.

De telles clés virtuelles peuvent être distribuées au moyen d'un serveur de confiance qui émet alors typiquement la clé virtuelle sous forme chiffrée, par exemple à destination d'un élément sécurisé du terminal utilisateur.

Cette solution implique toutefois le recours à un serveur de confiance dès qu'une nouvelle clé virtuelle est générée et doit être communiquée à un terminal utilisateur, ce qui est particulièrement contraignant.

OBJET DE L'INVENTION

Dans ce contexte, la présente invention propose un procédé de chargement, au sein d'un terminal utilisateur, d'une clé virtuelle de commande d'au moins une fonctionnalité d'un véhicule, caractérisé en ce qu'il comprend les étapes suivantes :

- réception, par le terminal utilisateur, de la clé virtuelle chiffrée ;
- transfert de la clé virtuelle chiffrée à un élément sécurisé embarqué dans le terminal utilisateur ;
- déchiffrement de la clé virtuelle au moyen d'une clé de communication mémorisée dans l'élément sécurisé.

On peut ainsi charger de manière sécurisée la clé virtuelle dans le terminal utilisateur sans avoir recours à un serveur de confiance, sauf éventuellement (et dans ce cas une fois pour toutes) pour le chargement de la clé de communication dans l'élément sécurisé.

Selon des caractéristiques optionnelles et donc non limitatives :

- le procédé comprend une étape de mémorisation de la clé virtuelle dans l'élément sécurisé ;
- le procédé comprend une étape préalable de chargement de la clé de communication dans l'élément sécurisé au moyen d'un échange de données entre un serveur de confiance et l'élément sécurisé ;
- ledit échange de données est réalisé entre le serveur de confiance et un domaine de sécurité de l'élément sécurisé ;
- ledit échange de données comprend la transmission de la clé de communication sous forme chiffrée du serveur de confiance à l'élément sécurisé ;
- le procédé comprend une étape de transmission d'une appliquette du serveur de confiance à l'élément sécurisé ;
- le procédé comprend une étape d'installation de l'appliquette dans l'élément sécurisé.

Le procédé peut en outre comprendre l'une au moins des étapes suivantes :

- détermination, au sein du terminal utilisateur, d'une donnée d'authentification en fonction de la clé virtuelle ;
- transmission de la donnée d'authentification du terminal utilisateur à une unité électronique équipant le véhicule ;
- vérification de la donnée d'authentification par l'unité électronique ;
- commande de la fonctionnalité par l'unité électronique en cas de vérification positive.

Le procédé peut par ailleurs comprendre des étapes de génération et/ou de chiffrement de la clé virtuelle par un serveur ; la clé virtuelle chiffrée peut alors être reçue par le terminal utilisateur en provenance dudit serveur. On peut prévoir en pratique, comme expliqué dans la description qui suit, que la clé virtuelle soit générée en fonction d'une clé racine et d'au moins une borne temporelle.

L'invention propose également un terminal utilisateur comprenant un module de réception d'une clé virtuelle de commande d'au moins une fonctionnalité d'un véhicule sous forme chiffrée, un module de transfert de la clé virtuelle chiffrée à un élément sécurisé embarqué dans le terminal utilisateur, et un module de déchiffrement de la clé virtuelle au moyen d'une clé de communication mémorisée dans l'élément sécurisé.

Lorsque le terminal utilisateur comprend un processeur et une mémoire mémorisant notamment des instructions exécutables par le processeur, chacun des modules susmentionnés peut être réalisé par un ensemble spécifique d'instructions permettant de mettre en oeuvre la fonction du module concerné (en coopération éventuellement avec un circuit extérieur au processeur tel qu'un module de communication) lorsque les instructions de l'ensemble sont exécutées par le processeur.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un exemple de contexte dans lequel peut-être mise en oeuvre l'invention, comprenant notamment un véhicule et un terminal utilisateur ;
- la figure 2 représente schématiquement des composants, utiles à la compréhension de l'invention, du véhicule et du terminal utilisateur de la figure 1 ;
- la figure 3 présente les étapes principales d'un exemple de procédé de chargement d'une clé virtuelle au sein du terminal utilisateur selon l'invention ;
- la figure 4 présente les étapes principales d'un exemple de procédé de commande d'une fonctionnalité du véhicule au moyen du terminal utilisateur.

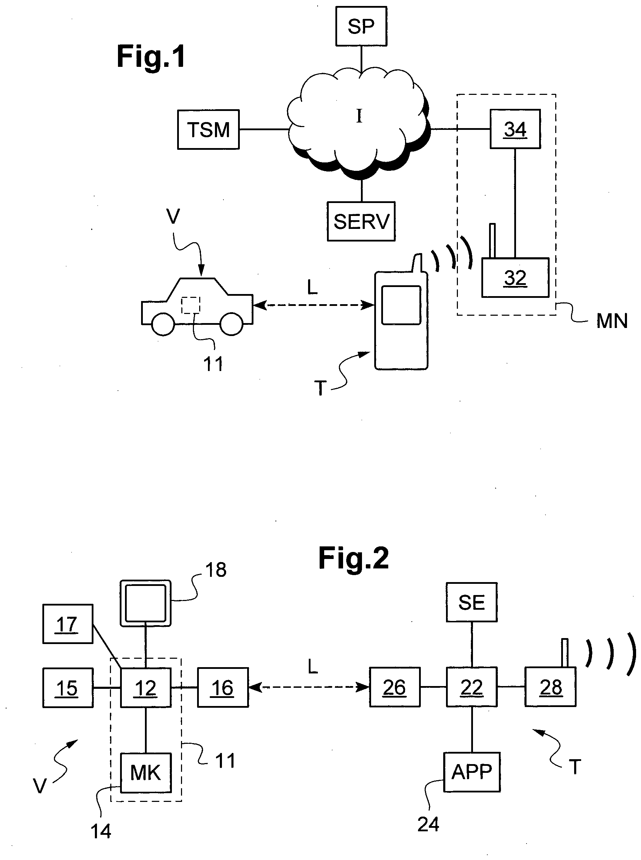

La figure 1 représente un exemple de contexte dans lequel peut être mise en oeuvre l'invention.

Dans ce contexte, un véhicule V comprend une unité électronique de commande 11 (ou ECU pour *"Electronic Control Unit"*) qui peut entrer en communication via une liaison sans fil L avec un terminal utilisateur T, par exemple un téléphone portable (ou téléphone cellulaire), éventuellement de type *"téléphone intelligent'* ou *"smartphone"* selon la dénomination anglo-saxonne couramment utilisée, afin d'échanger des données avec ce terminal utilisateur T, par exemple en vue de la commande de fonctionnalités du véhicule V au moyen du terminal utilisateur T (une telle fonctionnalité pouvant être par exemple le déverrouillage des portes du véhicule V), comme expliqué plus bas.

La liaison sans fil L utilisée pour communiquer entre l'unité électronique de commande 11 et le terminal utilisateur T est par exemple de type *"Bluetooth Low Energy"* (ou BLE).

Le terminal utilisateur T est par ailleurs conçu pour se connecter à un réseau de téléphonie mobile MN qui comprend notamment une station de base 32 en communication via une liaison radio avec le terminal utilisateur T et une passerelle 34 de connexion à un réseau public I, par exemple le réseau Internet.

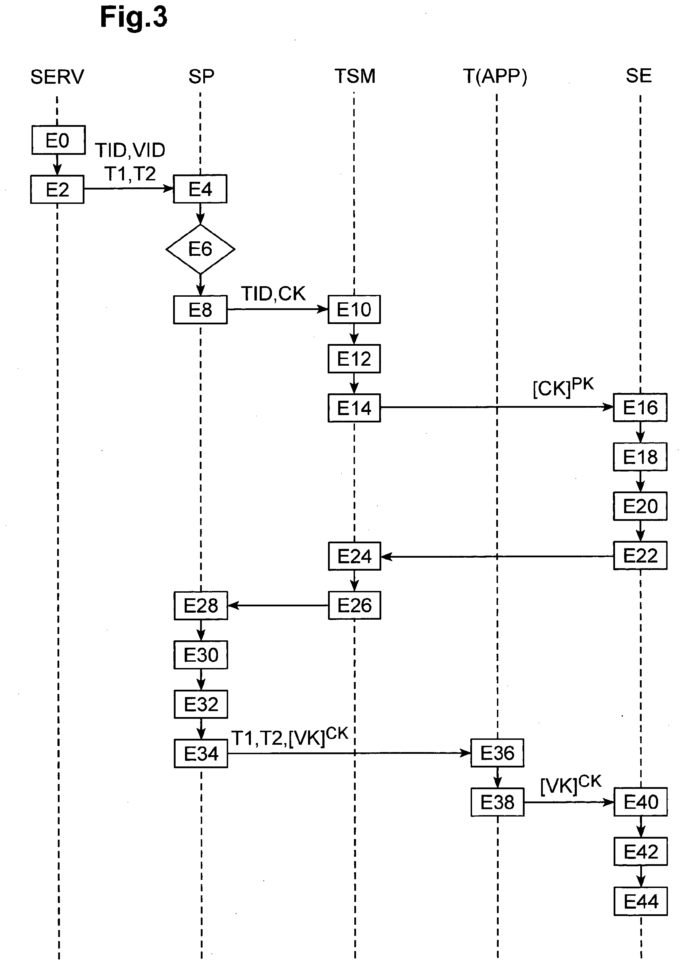

Différents serveurs TSM, SP, SERV sont également connectés au réseau public I de sorte que le terminal utilisateur T et ces serveurs TSM, SP, SERV peuvent entrer en communication deux à deux et échanger entre eux des données via le réseau public I (et éventuellement le réseau de téléphonie mobile MN), par exemple comme décrit plus bas en référence à la figure 3. Ces différents serveurs comprennent :

- un serveur de confiance TSM (ou, selon l'appellation anglo-saxonne "*Trusted Service Manager*");
- une plateforme de sécurité SP, gérée par exemple par le fabricant de l'unité électronique de commande 11
- un serveur d'accès au service SERV auquel des utilisateurs peuvent se connecter pour initier le processus de chargement d'une clé virtuelle dans un terminal utilisateur comme décrit ci-dessous.

La figure 2 représente schématiquement des composants, utiles à la compréhension de l'invention, du véhicule V et du terminal utilisateur T.

Le véhicule V comprend notamment l'unité électronique de commande 11 déjà mentionnée, un actionneur 15 (conçu ici pour permettre le déverrouillage des portes du véhicule V), un actionneur 17 (conçu pour permettre le démarrage du véhicule V), un module de communication sans fil 16 et une interface utilisateur 18.

L'unité électronique de commande comprend un processeur 12 et une unité de mémorisation 14, par exemple une mémoire non-volatile réinscriptible ou un disque dur.

L'unité de mémorisation 14 mémorise notamment des programmes d'ordinateur comprenant des instructions dont l'exécution par le processeur 12 permet la mise en oeuvre par l'unité électronique de commande 11 des procédés décrits ci-dessous.

L'unité de mémorisation 14 mémorise également des données utilisées dans le cadre des procédés décrits ci-dessous, notamment une clé racine (ou clé maître) MK, utilisée comme expliqué dans la suite.

La clé racine MK est par exemple écrite dans l'unité de mémorisation 14 lors de la fabrication de l'unité électronique de commande 11, avant montage de cette unité électronique de commande 11 dans le véhicule V.

La clé racine MK est également mémorisée au niveau de la plateforme de sécurité SP, par exemple en association avec un identifiant VID du véhicule V, tel que l'identifiant VIN (pour *"Vehicle Identification Number"*).

Le terminal utilisateur T comprend un processeur 22, une mémoire 24 (par exemple une mémoire non-volatile réinscriptible), un module de communication sans fil 26 et un module 28 de communication sur le réseau de téléphonie mobile MN.

La mémoire 24 mémorise des programmes d'ordinateur, notamment une application APP, comprenant des instructions dont l'exécution par le processeur 22 permet la mise en oeuvre par le terminal utilisateur T des procédés décrits ci-dessous. L'application APP a par exemple été téléchargée au préalable dans la mémoire 24 par l'utilisateur du terminal utilisateur T.

Le module de communication sans fil 26 du terminal utilisateur T permet d'établir une liaison sans fil (ici de type *"Bluetooth Low Energy"* comme déjà indiqué) avec le module de communication sans fil 16 du véhicule V à travers laquelle le processeur 12 de l'unité électronique de commande 11 et le processeur 22 du terminal utilisateur T peuvent échanger des données, notamment comme exposé plus loin.

Le module de communication 28 permet au terminal utilisateur T (et précisément au processeur 22 équipant ce terminal utilisateur T) d'échanger comme déjà indiqué des données avec d'autres dispositifs connectés au réseau de téléphonie mobile MN ou au réseau public I, notamment avec le serveur SP.

Le terminal utilisateur T comprend également un élément sécurisé SE (ou *"Secure Element"* selon l'appellation anglo-saxonne). Cet élément sécurisé SE peut par exemple mémoriser des données de connexion associées à un abonnement au service de téléphonie mobile et permettant d'établir la connexion sur le réseau de téléphonie mobile MN.

Cet élément sécurisé SE est par exemple une carte à puce (telle qu'une carte à circuit intégré universelle ou UICC pour *"Universal Integrated Circuit Card"*) reçue dans un lecteur (non représenté) du terminal utilisateur T relié au processeur 22.

En variante, l'élément sécurisé SE pourrait être de type incrusté (par exemple de type eSE pour *"embedded Secure Element"*). L'élément sécurisé SE est par exemple dans ce cas soudé au sein du terminal utilisateur T et relié au processeur 22.

Dans une autre variante, l'élément sécurisé pourrait être de type hybride matériel et logiciel (par exemple de type HCE pour *"Host Card Emulation"* ou TEE pour *"Trusted Execution Environment"*).

La figure 3 présente les étapes principales d'un exemple de procédé de chargement d'une clé virtuelle VK au sein du terminal utilisateur T.

Ce procédé débute à l'étape E0 à laquelle un utilisateur se connecte au serveur d'accès au service SERV, par exemple au moyen d'un ordinateur personnel (non représenté) connecté au réseau public I ou au moyen du terminal utilisateur T (soit du fait de l'exécution par le processeur 22 de l'application APP, soit du fait de l'exécution par le processeur 22 d'un navigateur). L'identité de l'utilisateur peut être vérifiée lors de cette connexion, par exemple par saisie d'un mot de passe ou autre méthode d'authentification (basée éventuellement sur au moins deux facteurs de reconnaissance).

L'utilisateur peut ainsi communiquer au serveur d'accès au service SERV les informations suivantes :

- un identifiant TID associé au terminal utilisateur T avec lequel on souhaite pouvoir commander les fonctionnalités du véhicule V ;
- des bornes temporelles T1, T2 définissant une période de validité de la clé virtuelle VK qui sera délivrée et transmise au terminal utilisateur T ;
- l'identifiant VID du véhicule V dont on souhaite commander les fonctionnalités.

Naturellement, l'utilisateur qui se connecte ainsi au serveur d'accès au service SERV peut vouloir permettre la commande des fonctionnalités du véhicule V par son propre terminal utilisateur, ou par le terminal utilisateur d'une personne de son entourage, ou encore (dans le cas de la location de véhicule) à un utilisateur temporaire du véhicule V.

L'identifiant TID associé au terminal utilisateur T est par exemple le numéro d'appel attribué à l'utilisateur dans le cadre de son abonnement au service de téléphonie mobile susmentionné (ou MSISDN pour *"Mobile Station ISDN number"*), le numéro d'abonné (ou IMSI pour *"International Subscriber Mobile Identity"*) de l'utilisateur ou l'identifiant du terminal utilisateur T (ou IMEI pour *"International Mobile Equipment Identity"*).

Lors de l'étape E2, le serveur d'accès au service SERV peut ainsi transmettre à la plateforme de sécurité SP les données saisies à l'étape E0, par exemple l'identifiant TID associé au terminal utilisateur T, l'identifiant VID du véhicule V et les bornes temporelles T1, T2.

La plateforme de sécurité SP reçoit ces données à l'étape E4 et peut ainsi déterminer à l'étape E6 si le terminal utilisateur T désigné par l'identifiant TID reçu (à l'étape E4) a déjà été pourvu d'une clé de communication CK (et d'une appliquette de gestion de clé virtuelle utilisant cette clé de communication CK), par exemple en vérifiant la présence de l'identifiant TID dans une liste des identifiants associés aux terminaux utilisateurs pour lesquels les étapes E8 à E28 décrites ci-dessous ont déjà été mises en oeuvre. La clé de communication étant mémorisée dans l'élément sécurisé SE comme expliqué plus loin, l'identifiant TID peut être un identifiant du terminal utilisateur T lorsque l'élément sécurisé SE est soudé au terminal utilisateur, ou un identifiant associé à l'abonnement au service de téléphonie mobile (par exemple le numéro MSISDN) lorsque l'élément sécurisé SE contient des données de connexion liées à cet abonnement, comme indiqué ci-dessus.

Si le terminal utilisateur T est pourvu d'une clé de communication CK (mémorisée dans l'élément sécurisé SE de ce terminal utilisateur T), le procédé se poursuit à l'étape E30 décrite plus loin.

En revanche, si le terminal utilisateur T n'est pas pourvu d'une clé de communication CK, le procédé se poursuit à l'étape E8 à laquelle la plateforme de sécurité SP envoie au serveur de confiance TSM l'identifiant TID du terminal utilisateur T à pourvoir d'une clé de communication CK, et la clé de communication CK à enregistrer dans l'élément sécurisé SE du terminal T.

Les échanges entre la plateforme de sécurité SP et le serveur de confiance TSM sont typiquement chiffrés, par exemple au moyen d'une infrastructure à clé publique (ou PKI pour *"Public Key Infrastructure"*) et d'une authentification mutuelle préalable (non décrite ici) entre ces deux serveurs.

Le serveur de confiance TSM reçoit l'identifiant TID et la clé de communication CK à l'étape E10 et se procure une clé publique PK associée à l'élément sécurisé SE à l'étape E12. Cette clé publique PK est ici associée à une clé privée mémorisée (par exemple au sein d'un domaine de sécurité) dans l'élément sécurisé SE (dans une infrastructure à clé publique ou PKI pour *"Public Key Infrastructure"*).

Le serveur de confiance TSM peut obtenir la clé publique PK associée à l'élément sécurisé SE soit en consultant une base de donnés (mémorisée par exemple au sein du serveur de confiance TSM), soit en s'adressant à un serveur (non représenté) de gestion de l'élément sécurisé SE.

Comme déjà indiqué, lorsque l'élément sécurisé SE est une carte à puce associée à un abonnement au service de téléphonie mobile, l'identifiant TID est par exemple un identifiant lié à l'abonnement, tel que le numéro d'appel MSISDN, et la clé publique PK peut être obtenue auprès d'un serveur de gestion du service de téléphonie mobile. Selon une autre possibilité, lorsque l'élément sécurisé SE est soudé au terminal utilisateur T, l'identifiant TID est un identifiant du terminal T et la clé publique PK peut être obtenue auprès d'un serveur géré par le fabricant du terminal T.

Le serveur de confiance TSM émet alors (étape E14) à destination de l'élément sécurisé SE une requête d'installation d'une appliquette et de personnalisation de cette appliquette avec la clé de communication CK. Lors de cette étape E14, la clé de communication CK (ainsi qu'éventuellement l'appliquette) est transmise chiffrée au moyen de la clé publique PK.

Cette transmission de données du serveur de confiance TSM à l'élément sécurisé SE utilise les moyens de communication du terminal utilisateur T (et notamment le module de communication 28) bien que cela n'apparaisse pas sur la figure 3 du fait que le processeur 22 du terminal utilisateur T n'effectue alors aucun traitement des données transmises.

On remarque qu'en pratique deux requêtes distinctes pourraient être transmises du serveur de confiance TSM à l'élément sécurisé SE, l'une visant l'installation de l'appliquette, l'autre la personnalisation de l'appliquette au moyen de la clé de communication CK.

Dans l'exemple décrit ici, l'élément sécurisé SE reçoit la requête d'installation et de personnalisation de l'appliquette à l'étape E16.

L'élément sécurisé SE procède alors à l'installation de l'appliquette à l'étape E18 (éventuellement après déchiffrement de l'appliquette reçue chiffrée, au moyen de la clé privée associée à la clé publique PK et mémorisée dans l'élément sécurisé SE comme déjà indiqué).

L'élément sécurisé SE procède ensuite lors de l'étape E20 au déchiffrement de la clé de communication CK, au moyen de la clé privée associée à la clé publique PK et mémorisée dans l'élément sécurisé SE, et à la personnalisation de l'appliquette au moyen de la clé de communication CK déchiffrée (ce qui implique notamment la mémorisation de la clé de communication CK dans l'élément sécurisé SE).

L'élément sécurisé SE émet une réponse à destination du serveur de confiance TSM à l'étape E22 afin de confirmer à celui-ci le bon déroulement des étapes E18 et E20.

Le serveur de confiance TSM reçoit à l'étape E24 la confirmation du bon déroulement de l'installation et de la personnalisation de l'appliquette et peut ainsi transmettre à l'étape E26 un message à destination de la plateforme de sécurité SP pour confirmation de la mémorisation d'une clé de communication CK dans l'élément sécurisé SE.

La plateforme de sécurité SP reçoit cette confirmation à l'étape E28 et ajoute alors par exemple l'identifiant TID (émis à l'étape E8 et pour lequel la confirmation a été reçue à l'étape E28) dans la liste précitée des identifiants associés aux terminaux utilisateurs pour lesquels les étapes E8 à E28 ont été mises en oeuvre.

La plateforme de sécurité SP génère alors à l'étape E30 une clé virtuelle VK en fonction de la clé racine MK associée à l'identifiant VID du véhicule V reçu à l'étape E4 et des bornes temporelles T1, T2 (également reçues à l'étape E4), par exemple au moyen d'une fonction cryptographique f (telle qu'une fonction cryptographique de dérivation de clé) :

$$VK = f(MK, T1, T2).$$

On peut prévoir dans certains modes de réalisation que la clé virtuelle VK soit déterminée en outre en fonction de l'identifiant TID du terminal utilisateur T, auquel cas VK = f(MK, T1, T2, TID), et/ou en fonction d'autres informations (telles que des informations relatives aux fonctionnalités que la clé virtuelle VK peut commander).

La plateforme de sécurité SP chiffre ensuite à l'étape E32 la clé virtuelle VK en utilisant la clé de communication CK, par exemple par application à la clé virtuelle VK d'un algorithme cryptographique de chiffrement utilisant la clé de communication CK.

La plateforme de sécurité transmet alors la clé virtuelle VK, chiffrée au moyen de la clé de communication CK, à destination du terminal utilisateur T (étape E34).

Pour effectuer cette transmission, la plateforme de sécurité SP transmet par exemple au terminal utilisateur T une notification de disponibilité et le terminal utilisateur T émet alors une requête (par exemple de type https) d'obtention de la clé virtuelle VK, la transmission de l'étape E34 étant réalisée en réponse à cette requête.

En variante, cette transmission pourrait être réalisée au cours de l'exécution de l'application APP par le processeur 22 du terminal utilisateur T, par exemple suite à une sélection (par l'utilisateur du terminal utilisateur T), sur un écran tactile du terminal utilisateur T, d'un bouton virtuel de chargement de clé virtuelle. Dans ce cas, une demande de clé virtuelle est envoyée du terminal utilisateur T à la plateforme de sécurité SP lorsque le bouton virtuel est sélectionné et l'étape E34 n'est mise en oeuvre qu'à réception de cette demande.

Selon une autre variante encore, la clé virtuelle VK chiffrée par la clé de communication CK pourrait être transmise au sein d'un message émis par la plateforme de sécurité SP et adressé au terminal utilisateur T dont l'identifiant TID a été reçu à l'étape E4.

On prévoit ici de transmettre en outre à l'étape E34 les bornes temporelles T1, T2 pour mémorisation de celles-ci dans la mémoire 24 du terminal utilisateur T.

Le processeur 22 du terminal utilisateur T, sur lequel s'exécute ici l'application APP, reçoit la clé virtuelle VK, chiffrée au moyen de la clé de communication CK, ainsi ici que les bornes temporelles T1, T2 à l'étape E36. Les bornes temporelles T1, T2 peuvent alors être mémorisées dans la mémoire 24.

Le processeur 22 (du fait de l'exécution de l'application APP) envoie alors (par exemple au sein d'une commande APDU) la clé virtuelle VK chiffrée au moyen de la clé de communication CK à l'élément sécurisé SE (étape E38) pour déchiffrement et mémorisation, par exemple en faisant appel à l'appliquette installée à l'étape E18.

Le processeur 22, grâce à l'exécution de l'application APP, est donc utilisé ici comme intermédiaire (ou *"proxy"* selon l'appellation anglo-saxonne) entre la plateforme de sécurité SP et l'élément sécurisé SE.

L'élément sécurisé SE reçoit la clé virtuelle VK chiffrée à l'étape E40 et procède à l'étape E42 à son déchiffrement au moyen de la clé de communication CK (mémorisée à l'étape E20), par exemple par application à la clé virtuelle VK chiffrée d'un algorithme cryptographique de déchiffrement utilisant la clé de communication CK.

La clé virtuelle VK, une fois déchiffrée, est mémorisée dans l'élément sécurisé SE à l'étape E44.

Les étapes E40, E42 et E44 sont par exemple mises en oeuvre du fait de l'exécution de l'appliquette (installée à l'étape E18) au sein de l'élément sécurisé SE.

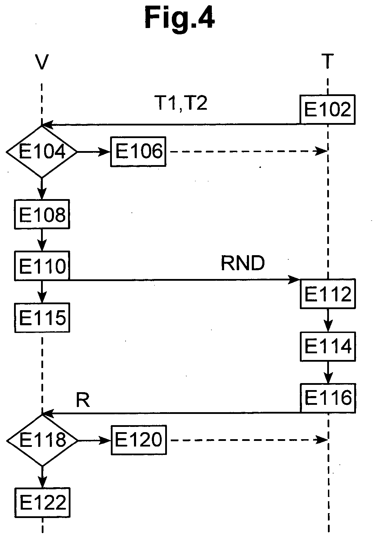

Le terminal utilisateur T (ici précisément l'élément sécurisé SE) détient ainsi à présent la clé virtuelle VK et pourra ainsi commander au moins une fonctionnalité du véhicule V, par exemple selon le procédé décrit ci-dessous en référence à la figure 4.

On remarque que le procédé qui vient d'être décrit ne fait appel au serveur de confiance TSM que lors du premier chargement d'une clé virtuelle au sein du terminal utilisateur T (ou, précisément, de l'élément sécurisé SE). En effet, pour d'autres chargements d'une clé virtuelle dans ce même terminal utilisateur T (ou, précisément, dans le même élément sécurisé SE), le procédé décrit ci-dessus bifurque à l'étape E6 vers l'étape E30 et le serveur de confiance TSM n'est donc pas sollicité.

La figure 4 présente les étapes principales d'un exemple de procédé de commande d'une fonctionnalité du véhicule V (ici le déverrouillage des portes du véhicule V) au moyen du terminal utilisateur T.

D'autres étapes que celles décrites ci-dessous peuvent naturellement être mises en oeuvre en pratique, en particulier au préalable afin d'établir un canal de communication entre l'unité électronique de commande 11 du véhicule V et le terminal utilisateur T.

Le terminal T émet à l'étape E102 une requête de mise en oeuvre de la fonctionnalité, accompagnée des bornes temporelles T1, T2, à destination de l'unité électronique de commande 11 du véhicule V (étape E102).

L'unité électronique de commande 11 vérifie alors à l'étape E104 que l'instant courant est bien compris entre les bornes temporelles T1, T2 (dont on rappelle qu'elles définissent la période de validité de la clé virtuelle VK).

Dans la négative, l'unité électronique de commande 11 met fin au procédé à l'étape E106 sans effectuer la fonctionnalité requise (c'est-à-dire ici sans déverrouiller les portes du véhicule V). Un message d'échec peut éventuellement être transmis au terminal T pour affichage sur le terminal T d'une indication correspondante.

En cas de vérification positive à l'étape E104, le procédé se poursuit à l'étape E108 à laquelle l'unité électronique de commande 11 calcule la clé virtuelle VK sur la base de la clé racine MK (mémorisée comme indiqué ci-dessus dans l'unité de mémorisation 14) et des bornes temporelles T1, T2, selon le même calcul que celui effectué comme indiqué ci-dessus au sein de la plateforme de sécurité PS (voir ci-dessus la description de l'étape E30), ici par application de la fonction cryptographique de dérivation de clé f à la clé racine MK et aux bornes temporelles T1, T2, soit $VK = f(MK, T1, T2)$.

Dans les modes de réalisation où d'autres informations (par exemple l'identifiant TID du terminal utilisateur T) ont été utilisées à l'étape E30 pour la génération de la clé virtuelle VK, ces informations sont également utilisées à l'étape E104 pour calculer la clé virtuelle VK.

L'unité électronique de commande 11 génère alors à l'étape E110 un défi, par exemple un nombre aléatoire RND, et émet ce défi à destination du terminal utilisateur T.

Le terminal utilisateur T (précisément le processeur 22) reçoit ce défi à l'étape E112.

À l'étape E114, le processeur 22 transmet à l'élément sécurisé SE le défi reçu RND en demandant (par exemple du fait du lancement de l'exécution d'une fonction de l'appliquette installée à l'étape E18 décrite plus haut) l'application, au défi transmis RND, d'une fonction cryptographique h utilisant la clé virtuelle VK (mémorisée dans l'élément sécurisé à l'étape E44 décrite plus haut). Le processeur obtient ainsi de l'élément sécurisé SE une réponse R : $R = h_{RND}(VK)$.

En parallèle, l'unité électronique de commande 11 effectue à l'étape E115 un calcul identique (en fonctionnement normal) afin d'obtenir de son côté la réponse attendue ; on note ici R' le résultat de ce calcul : $R' = h_{RND}(VK)$.

Le terminal utilisateur T émet la réponse R (calculée au sein de l'élément sécurisé SE à l'étape E114) à destination de l'unité électronique de commande 11 (étape E116).

L'unité électronique de commande 11 vérifie alors à l'étape E118 que la réponse R reçue du terminal utilisateur T est bien égale à la réponse attendue R', auquel cas l'unité électronique de commande 11 peut considérer que le terminal utilisateur T détient bien la clé virtuelle VK qui donne un droit d'accès au véhicule.

En cas d'échec de la vérification à l'étape E118 (ce qui n'est pas le cas dans le fonctionnement normal décrit ci-dessus, mais peut-être le cas lorsqu'une personne malintentionnée tente d'accéder au véhicule sans connaître la clé virtuelle VK), l'unité électronique de commande 11 met fin au procédé à l'étape E120 sans effectuer la fonctionnalité requise (c'est-à-dire ici sans déverrouiller les portes du véhicule V). Un message d'échec peut éventuellement être transmis au terminal T pour affichage sur le terminal T d'une indication correspondante.

Lorsque l'égalité entre la réponse R reçue du terminal utilisateur T et la réponse attendue R' calculée par l'unité électronique de commande 11 est vérifiée à l'étape E118, on procède à l'étape E122 à laquelle l'unité électronique de commande 11 effectue la fonctionnalité demandée, ici le déverrouillage des portes du véhicule, en émettant une commande correspondante, ici à destination de l'actionneur 15 pour déverrouillage des portes (ou, dans le cas du démarrage du véhicule, à l'actionneur 17).

Dans l'exemple qui vient d'être décrit, une authentification simple est utilisée ; on peut toutefois prévoir en variante d'utiliser une authentification mutuelle, par exemple lorsque la fonctionnalité souhaitée est le démarrage du véhicule.

**Revendications**

1. Procédé de chargement, au sein d'un terminal utilisateur (T), d'une clé virtuelle (VK) de commande d'au moins une fonctionnalité d'un véhicule (V), au moyen d'un serveur d'accès au service (SERV), d'un serveur de confiance (TSM) et d'une plateforme de sécurité (SP), ledit premier chargement ayant entre autre permis le chargement d'une clé de communication (CK) dans ledit terminal utilisateur (T), comprenant les étapes suivantes :

- détermination (E6) par la plateforme de sécurité (SP) si le terminal utilisateur (T) désigné par un premier identifiant (TID) a déjà été pourvu d'une clé de communication (CK) ;
- si le terminal utilisateur (T) n'a pas déjà été pourvu d'une clé de communication (CK), transmission (E14) du serveur de confiance (TSM) à l'élément sécurisé (SE) d'une requête d'installation d'une appliquette et de personnalisation de cette appliquette avec la clé de communication CK, installation (E18) de l'appliquette dans l'élément sécurisé (SE) et chargement (E20) de la clé de communication (CK) dans un élément sécurisé (SE) du terminal (T) au moyen d'un échange de données entre le serveur de confiance (TSM) et l'élément sécurisé (SE) ;
- lorsque le terminal utilisateur (T) est pourvu d'une clé de communication (CK), génération (E30) par la plateforme de sécurité (SP) d'une clé virtuelle (VK) en fonction d'une clé racine (MK) associée à l'identifiant (VID) du véhicule (V) et de bornes temporelles (T1, T2) ;
- réception (E36), par le terminal utilisateur, de la clé virtuelle (VK) chiffrée par la plateforme de sécurité (SP) en utilisant la clé de communication (CK) ;
- transfert (E38) de la clé virtuelle (VK) chiffrée à un élément sécurisé (SE) embarqué dans le terminal utilisateur (T) ;
- déchiffrement (E42) de la clé virtuelle (VK) au moyen d'une clé de communication (CK) mémorisée dans l'élément sécurisé (SE).

2. Procédé selon la revendication 1, comprenant une étape de mémorisation (E44) de la clé virtuelle (VK) dans l'élément sécurisé (SE).

3. Procédé selon l'une des revendications précédentes, dans lequel ledit échange de données comprend la transmission (E14) de la clé de communication (CK) sous forme chiffrée du serveur de confiance (TSM) à l'élément sécurisé (SE).

4. Procédé selon l'une des revendications précédentes, comprenant les étapes suivantes :

- détermination (E114), au sein du terminal utilisateur (T), d'une donnée d'authentification (R) en fonction de la clé virtuelle (VK) ;
- transmission (E116) de la donnée d'authentification (R) du terminal utilisateur (T) à une unité électronique (11) équipant le véhicule (V) ;
- vérification (E118) de la donnée d'authentification (R) par l'unité électronique (11) ;
- commande de la fonctionnalité par l'unité électronique (11) en cas de vérification positive.

**Patentansprüche**

1. Verfahren zum Laden, innerhalb eines Benutzerendgeräts (T), eines virtuellen Schlüssels (VK) zur Steuerung mindestens einer Funktionalität eines Fahrzeugs (V) mittels eines Dienst-Zugangsservers (SERV), eines Trusted Service Managers (TSM) und einer Sicherheitsplattform (SP), wobei das erste Laden unter anderem das Laden eines Kommunikationsschlüssels (CK) in das Benutzerendgerät (T) erlaubt hat, das die folgenden Schritte enthält:

- Bestimmung (E6) durch die Sicherheitsplattform (SP), ob das durch eine erste Kennung (TID) bezeichnete Benutzerendgerät (T) bereits mit einem Kommunikationsschlüssel (CK) versehen wurde;
- wenn das Benutzerendgerät (T) nicht bereits mit einem Kommunikationsschlüssel (CK) versehen wurde, Übertragung (E14) vom Trusted Service Manager (TSM) an das sichere Element (SE) einer Anforderung der Installation eines Applets und der Benutzeranpassung dieses Applets mit dem Kommunikationsschlüssel CK, Installation (E18) des Applets im sicheren Element (SE) und Laden (E20) des Kommunikationsschlüssels (CK) in ein sicheres Element (SE) des Endgeräts (T) mittels eines Datenaustauschs zwischen dem Trusted Service Manager (TSM) und dem sicheren Element (SE);
- wenn das Benutzerendgerät (T) mit einem Kommunikationsschlüssel (CK) versehen ist, Generierung (E30) eines virtuellen Schlüssels (VK) durch die Sicherheitsplattform (SP) abhängig von einem der Kennung (VID) des Fahrzeugs (V) zugeordneten Wurzelschlüssel (MK) und von zeitlichen Grenzen (T1, T2);
- Empfang (E36), durch das Benutzerendgerät, des von der Sicherheitsplattform (SP) unter Verwendung des Kommunikationsschlüssels (CK) verschlüsselten virtuellen Schlüssels (VK);
- Übertragung (E38) des verschlüsselten virtuellen Schlüssels (VK) an ein im Benutzerendgerät (T) befindliches sicheres Element (SE);
- Entschlüsselung (E42) des virtuellen Schlüssels (VK) mittels eines im sicheren Element (SE) gespeicherten Kommunikationsschlüssels (CK).

**2.** Verfahren nach Anspruch 1, das einen Schritt des Speicherns (E44) des virtuellen Schlüssels (VK) im sicheren Element (SE) enthält.

**3.** Verfahren nach einem der vorhergehenden Ansprüche, wobei der Datenaustausch die Übertragung (E14) des Kommunikationsschlüssels (CK) in verschlüsselter Form vom Trusted Service Manager (TSM) zum sicheren Element (SE) enthält.

**4.** Verfahren nach einem der vorhergehenden Ansprüche, das die folgenden Schritte enthält:

- Bestimmung (E114), innerhalb des Benutzerendgeräts (T), eines Authentifizierungsdatenwerts (R) abhängig vom virtuellen Schlüssel (VK);
- Übertragung (E116) des Authentifizierungsdatenwerts (R) vom Benutzerendgerät (T) an eine in das Fahrzeug (V) eingebaute elektronische Einheit (11);
- Verifizierung (E118) des Authentifizierungsdatenwerts (R) durch die elektronische Einheit (11);
- Steuern der Funktionalität durch die elektronische Einheit (11) im Fall einer positiven Verifizierung.

**Claims**

**1.** Method for loading, into a user terminal (T), a virtual key (VK) for controlling at least one functionality of a vehicle (V), by means of a service access server (SERV), a trusted server (TSM) and a security platform (SP), said first loading having, *inter alia,* made it possible to load a communication key (CK) into said user terminal (T), comprising the following steps:

- the security platform (SP) determining (E6) whether the user terminal (T) designated by a first identifier (TID) has already been provided with a communication key (CK);
- if the user terminal (T) has not already been provided with a communication key (CK), transmitting (E14), from the trusted server (TSM) to the secure element (SE), a request to install an applet and to personalize this applet with the communication key (CK), installing (E18) the applet in the secure element (SE) and loading (E20) the communication key (CK) into a secure element (SE) of the terminal (T) by means of a data exchange between the trusted server (TSM) and the secure element (SE);
- when the user terminal (T) is provided with a communication key (CK), the security platform (SP) generating (E30) a virtual key (VK) as a function of a root key (MK) associated with the identifier (VID) of the vehicle (V) and temporal bounds (T1, T2);
- the user terminal receiving (E36) the virtual key (VK) encrypted by the security platform (SP) using the communication key (CK);
- transferring (E38) the encrypted virtual key (VK) to a secure element (SE) embedded in the user terminal (T);
- decrypting (E42) the virtual key (VK) by means of a communication key (CK) stored in the secure element (SE).

**2.** Method according to Claim 1, comprising a step of storing (E44) the virtual key (VK) in the secure element (SE) .

**3.** Method according to one of the preceding claims, in which said data exchange comprises transmitting (E14) the communication key (CK) in encrypted form from the trusted server (TSM) to the secure element (SE).

4. Method according to one of the preceding claims, comprising the following steps:

> - determining (E114), within the user terminal (T), an authentication datum (R) as a function of the virtual key (VK);
> - transmitting (E116) the authentication datum (R) from the user terminal (T) to an electronic unit (11) with which the vehicle (V) is equipped;
> - the electronic unit (11) verifying (E118) the authentication datum (R);
> - the electronic unit (11) controlling the functionality in the event of positive verification.

# Fig.1

# Fig.2

# Fig.3

| SERV | SP | TSM | T(APP) | SE |
|------|-----|-----|--------|-----|

E0

TID,VID
T1,T2

E2 → E4

E6

E8 —TID,CK→ E10

E12

E14 —$[CK]^{PK}$→ E16

E18

E20

E24 ← E22

E28 ← E26

E30

E32

E34 —T1,T2,$[VK]^{CK}$→ E36

E38 —$[VK]^{CK}$→ E40

E42

E44

# Fig.4